# EUROPEAN PATENT APPLICATION

(11) **EP 4 773 360 A1**
(43) Date of publication of application: **08.07.2026**
(21) Application number: 25226076.5
(22) Date of filing: 19.12.2025
(51) Int. Cl.: H01M 50/107, H01M 50/152, H01M 50/531, H01M 50/536, H01M 50/559, H01M 50/566

(54) **SECONDARY BATTERY AND METHOD OF MANUFACTURING THE SAME**

(30) Priority: 26.12.2024 KR 20240197067
(71) Applicant: SK On Co., Ltd., Seoul 03161 (KR)
(72) Inventor: KWAK, Seung Ho, Daejeon 34124 (KR); PARK, Soo Min, Daejeon 34124 (KR); PARK, Jae Yun, Daejeon 34124 (KR); LEE, Joo Hyuk, Daejeon 34124 (KR); CHO, Myeong Shin, Daejeon 34124 (KR); LEE, Dong Gu, 13558 Seongnam-si (KR)
(74) Representative: Stolmár & Partner Patentanwälte PartG mbB

(57) **Abstract**

Provided are a secondary battery and a method of manufacturing the same. According to one aspect of the present disclosure, a secondary battery may be provided, which includes an electrode assembly provided with an electrode tab, a can that accommodates the electrode assembly and has a coupling hole provided in an outer part of one surface facing the electrode tab, and a terminal inserted into the coupling hole and electrically connected to the electrode tab.

## Description

### TECHNICAL FIELD

The present disclosure relates to a secondary battery and a method of manufacturing the same.

### BACKGROUND

A secondary battery is one of energy storage means which can be charged and discharged through electrochemical reactions. The secondary battery may be used in various fields in which electrical energy is used. For example, secondary batteries are widely utilized in the field of mobile devices such as a cell phone, a notebook, a tablet, and the like, and are being explored for wider utilization in the field of transportation means such as vehicles, aircraft, ships, and the like. Further, demand for secondary batteries is also rapidly increasing in the field of energy storage systems (ESSs) for utilizing surplus electricity.

The secondary batteries may be classified into a pouch type, a prismatic type, a cylindrical type, a coin type, and the like depending on the packaging form. Among the above, demand for the cylindrical secondary battery is rapidly increasing in the field of vehicles in recent years due to advantages such as a standardized size, convenience of mass production, and the like. Meanwhile, some cylindrical secondary batteries adopt a tabless structure in which a lead tab is omitted. The tabless structure can secure a wider current-carrying area than the lead tab method, making it effective in reducing resistance and heat generation.

### SUMMARY

Embodiments of the present disclosure are directed to providing a secondary battery and a method of manufacturing the same.

Some embodiments of the present disclosure are also directed to providing a secondary battery having a simplified structure and a method of manufacturing the same.

Some embodiments of the present disclosure are also directed to providing a secondary battery with a reduced number of components and a method of manufacturing the same.

Some embodiments of the present disclosure are also directed to providing a secondary battery with reduced costs and a method of manufacturing the same.

Some embodiments of the present disclosure may be widely applied in green technology fields such as electric vehicles, battery charging stations, and solar power generation and wind power generation using batteries. In addition, some embodiments of the present disclosure may be used in eco-friendly electric vehicles, hybrid vehicles, etc. to prevent climate change by suppressing air pollution and greenhouse gas emissions.

According to an aspect of the present disclosure, there is provided a secondary battery including an electrode assembly provided with an electrode tab, a can that accommodates the electrode assembly and has a coupling hole provided in an outer part of a surface facing the electrode tab, and a terminal inserted into the coupling hole and electrically connected to the electrode tab.

In some embodiments, an insulator interposed between the terminal and the can may be further included.

In some embodiments, the terminal may include an outer portion supported on an outer surface of the can.

In some embodiments, the terminal may include an insertion portion inserted into the coupling hole and supported by the electrode tab.

In some embodiments, the insertion portion may include an opening that is open in a direction opposite to a direction in which the insertion portion is inserted into the coupling hole.

In some embodiments, the electrode tab and the insertion portion may be welded.

In some embodiments, the insertion portion may be provided with a welding line that is welded to the electrode tab.

In some embodiments, the electrode tab and the insertion portion may be bonded with a conductive adhesive.

In some embodiments, the coupling hole may be provided in a ring shape.

In some embodiments, the coupling hole may be provided in an arc shape.

In some embodiments, the secondary battery may further include a reinforcing member inserted into the opening of the insertion portion.

In some embodiments, the insertion portion may include a protrusion protruding laterally from a lower portion of the insertion portion.

According to another aspect of the present disclosure, there is provided a method of manufacturing a secondary battery, which includes inserting a terminal into a coupling hole, inserting an electrode assembly into the can, and electrically connecting the terminal and the electrode tab.

In some embodiments, the terminal may be inserted into the coupling hole and may include an insertion portion supported by the electrode tab, the insertion portion may include an opening that is open in a direction opposite to a direction in which the insertion portion is inserted into the coupling hole, and the method may further include inserting a reinforcing member into the opening.

In some embodiments, the terminal may be inserted into the coupling hole and may include an insertion portion supported by the electrode tab, the insertion portion may include an opening that is open in a direction opposite to a direction in which the insertion portion is inserted into the coupling hole, and the method may further include pressing a lower portion of the insertion portion to form a protrusion that protrudes laterally.

### BRIEF DESCRIPTION OF THE DRAWINGS

The following drawings attached to this specification illustrate embodiments of the present disclosure, and further describe aspects and features of the present disclosure together with the detailed description of the present disclosure. Thus, the present disclosure should not be construed as being limited to the drawings, in which:
FIG. 1 is a perspective view schematically illustrating a secondary battery according to one embodiment of the present disclosure;
FIG. 2 is a perspective view schematically illustrating an electrode assembly according to one embodiment of the present disclosure;
FIG. 3 is a schematic view illustrating the electrode assembly in FIG. 2 being wound around a central axis;
FIG. 4 is a view illustrating a flattening process of electrode tabs at upper and lower end portions of the electrode assembly wound as illustrated in FIG. 3;
FIG. 5 is a cross-sectional view illustrating an upper portion of the secondary battery illustrated in FIG. 1;
FIG. 6 is a plan view illustrating the secondary battery shown in FIG. 1;
FIG. 7 is a plan view illustrating a secondary battery according to another embodiment of the present disclosure;
FIG. 8 is a plan view illustrating a secondary battery according to still another embodiment of the present disclosure;
FIG. 9 is a plan view illustrating a secondary battery according to yet another embodiment of the present disclosure;
FIG. 10 is a cross-sectional view illustrating an upper portion of a secondary battery according to yet another embodiment of the present disclosure;
FIG. 11 is a cross-sectional view illustrating an upper portion of a secondary battery according to yet another embodiment of the present disclosure;
FIG. 12 is a flow chart illustrating a method of manufacturing a secondary battery according to one embodiment of the present disclosure;
FIG. 13 is a flow chart illustrating a method of manufacturing a secondary battery according to another embodiment of the present disclosure; and
FIG. 14 is a flow chart illustrating a method of manufacturing a secondary battery according to still another embodiment of the present disclosure.

### DETAILED DESCRIPTION

Hereinafter, the present disclosure will be described in detail with reference to the accompanying drawings. However, the following description is merely exemplary and is not intended to limit the present disclosure to the specific embodiments illustrated.

First, secondary batteries according to embodiments of the present disclosure will be described.

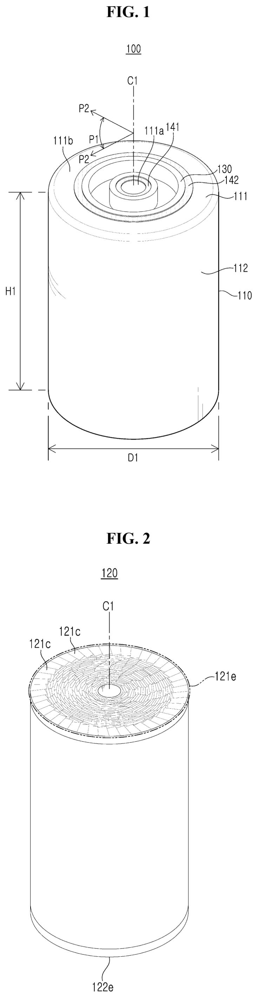

FIG. 1 is a perspective view schematically illustrating a secondary battery according to one embodiment of the present disclosure.

For convenience, hereinafter, a rotational direction about a central axis C1 illustrated in FIG. 1 is referred to as a circumferential direction P1, inward/outward directions toward and away from the central axis C1 in a plane perpendicular to the central axis C1 are referred to as radial directions P2, and a vertical direction along the central axis C1 is referred to as a vertical direction.

Referring to FIG. 1, in some embodiments, a secondary battery 100 may include a can 110. The can 110 may have an internal space in which an electrode assembly 120 is accommodated. In some embodiments, the can 110 may include an upper surface 111 and a side surface 112, and may be provided in a cylindrical shape with an open lower portion. Although not illustrated, an opening at the lower portion of the can 110 may be provided to be properly closed by a cap plate or the like.

In some embodiments, a terminal 130 may be provided on an upper surface 111 of the can 110. As will be described in detail below, a coupling hole 113 may be provided in one side of the can 110 that faces an electrode tab 121c provided on an upper portion of the electrode assembly 120, i.e., the upper surface 111 of the can 110, and the terminal 130 may be inserted into the coupling hole 113 and electrically connected to the electrode tab 121c. For example, the terminal 130 may function as a positive electrode terminal. In the above, the remaining area of the can 110 excluding the terminal 130 may function as another electrode terminal corresponding to the terminal 130. For example, the remaining area of the upper surface 111 of the can 110, excluding the terminal 130, may function as a negative electrode terminal. In some embodiments, a gasket may be provided between the terminal 130 and the can 110 for electrical insulation and mechanical sealing.

In some embodiments, the can 110 may be provided in a cylindrical shape having a predetermined diameter D1 and height H1. In other words, the secondary battery 100 may be provided in a cylindrical shape having a predetermined diameter D1 and height H1. For example, the secondary battery 100 may have a diameter of 46 mm and a height of 80 mm. In some cases, the secondary battery 100 having such a form factor may be referred to as a "4680 battery." As another example, the secondary battery 100 may have a diameter of 46 mm and a height of 80 mm, a diameter of 46 mm and a height of 95 mm, or a diameter of 46 mm and a height of 110 mm. In some cases, the secondary battery 100 having such a form factor may be referred to as a "46xx battery." In the above "46xx", "xx" may describe a height of the form factor. As another example, the secondary battery 100 may have a diameter of 48 mm and a height of 75 mm, a diameter of 48 mm and a height of 80 mm, or a diameter of 48 mm and a height of 110 mm. In some cases, the secondary battery 100 having such a form factor may be referred to as a "48xx battery." In the "48xx" above, "xx" may describe the height of the form factor. However, in the present disclosure, the diameter D1 and the height H1 of the secondary battery 100 may vary and are not necessarily limited to the above-described examples.

Meanwhile, although a cylindrical secondary battery 100 is exemplified in this description, the form factor of the secondary battery 100 according to the embodiments of the present disclosure is not necessarily limited to the exemplified cylindrical shape. The secondary battery 100 according to the embodiments of the present disclosure may be implemented or applied in various forms such as a coin-type, prismatic, pouch-type, and other non-standardized shapes within the scope of the technical idea described below.

FIG. 2 is a perspective view schematically illustrating an electrode assembly according to one embodiment of the present disclosure.

Referring to FIG. 2, in some embodiments, the secondary battery 100 may include an electrode assembly 120. The electrode assembly 120 may be accommodated within the can 110 as described above. In some embodiments, the electrode assembly 120 may be provided in a cylindrical roll shape by being wound around the central axis C1. The electrode assembly 120 in such a roll shape may be referred to as a jelly roll in the art.

In some embodiments, the electrode assembly 120 may include bonding surfaces 121e and 122e at one or both end portions in a direction of the central axis C1. That is, the electrode assembly 120 may respectively include the bonding surfaces 121e and 122e at upper and/or lower end portions. In the illustrated embodiment, the bonding surfaces 121e and 122e are respectively provided at the upper and lower end portions of the electrode assembly 120. For convenience, hereinafter, the bonding surface 121e provided at the upper end of the electrode assembly 120 is referred to as a first bonding surface 121e, and the bonding surface 122e provided at the lower end of the electrode assembly 120 is referred to as a second bonding surface 122e.

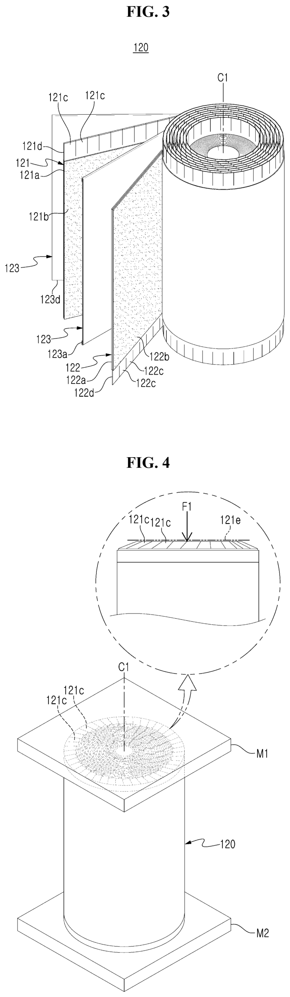

In the above, each of the bonding surfaces 121e and 122e may be provided by a plurality of electrode tabs 121c and 122c bent toward the central axis C1. That is, the first bonding surface 121e may be provided by a plurality of first electrode tabs 121c bent toward the central axis C1 at the upper end of the electrode assembly 120, and the second bonding surface 122e may be provided by a plurality of second electrode tabs 122c bent toward the central axis C1 at the lower end of the electrode assembly 120 (see FIG. 3). In other words, the first bonding surface 121e may be provided as an approximate surface formed by a plurality of bent first electrode tabs 121c, and the second bonding surface 122e may be provided as an approximate surface formed by a plurality of bent second electrode tabs 122c.

In the secondary battery 100 as described above, the plurality of electrode tabs 121c and 122c may include the predetermined bonding surfaces 121e and 122e, and may be electrically connected to electrode terminals through the bonding surfaces 121e and 122e. That is, in the secondary battery 100, a lead tab may be omitted, and each of the bonding surfaces 121e and 122e may replace the function of the lead tab. In some cases, such a secondary battery 100 may be referred to as a tabless battery or the like.

In some embodiments, each of the bonding surfaces 121e and 122e as described above may be bonded to a current collector or a cap plate. For example, the first bonding surface 121e may be welded to the current collector at the upper end of the electrode assembly 120, and the second bonding surface 122e may be welded to another current collector at the lower end of the electrode assembly 120. As another example, the first bonding surface 121e may be welded to the current collector at the upper end of the electrode assembly 120, and the second bonding surface 122e may be welded to the cap plate at the lower end of the electrode assembly 120. Accordingly, each of the bonding surfaces 121e and 122e may be electrically connected to the current collector or the cap plate.

FIG. 3 is a schematic view illustrating the electrode assembly in FIG. 2 being wound around a central axis.

Referring to FIG. 3, in some embodiments, the electrode assembly 120 may have a first electrode 121 and a second electrode 122 positioned with a separator 123 therebetween. The first electrode 121 and/or the second electrode 122 may be electrodes manufactured by an electrode manufacturing device 200. The separator 123 and the first and second electrodes 121 and 122 may be wound around the central axis C1. The first electrode 121 may function as a positive electrode or a negative electrode, and the second electrode 122 may function as the corresponding negative electrode or positive electrode. In this description, it is assumed that the first electrode 121 is a positive electrode and the second electrode 122 is a negative electrode.

In some embodiments, the first electrode 121 and the second electrode 122 may each include metal foils 121a and 122a wound around the central axis C1, active materials 121b and 122b provided on one or more surfaces of the metal foils 121a and 122a, and the plurality of electrode tabs 121c and 122c provided in one end regions of the metal foils 121a and 122a in the direction of the central axis C1 and bent toward the central axis C1. For convenience, hereinafter, the metal foil 121a, the active material 121b, and the electrode tab 121c corresponding to the first electrode 121 will be referred to as a first metal foil 121a, a first active material 121b, and a first electrode tab 121c, respectively, and the metal foil 122a, the active material 122b, and the electrode tab 122c corresponding to the second electrode 122 will be referred to as a second metal foil 122a, a second active material 122b, and a second electrode tab 122c, respectively.

In some embodiments, the first electrode 121 may include the first metal foil 121a. For example, the first metal foil 121a may include aluminum, stainless steel, nickel, titanium, or an alloy thereof. Additionally, the first electrode 121 may include the first active material 121b provided on one or more surfaces of the first metal foil 121a. In some embodiments, the first active material 121b may include a compound capable of reversibly intercalating and deintercalating lithium ions. For example, the first active material 121b may include a lithium-nickel metal oxide, and in some cases, the lithium-nickel metal oxide may further include cobalt, manganese, aluminum, or the like.

Similarly to the above, in some embodiments, the second electrode 122 may include the second metal foil 122a. For example, the second metal foil 122a may include copper, stainless steel, nickel, titanium, or an alloy thereof. Additionally, the second electrode 122 may include the second active material 122b provided on one or more surfaces of the second metal foil 122a. In some embodiments, the second active material 122b may include a compound capable of reversibly intercalating and deintercalating lithium ions. For example, the second active material 122b may include a carbon-based material such as crystalline carbon, amorphous carbon, carbon composite, or carbon fiber. Alternatively, the second active material 122b may include lithium metal, a lithium alloy, a silicon-containing material, a tin-containing material, and the like.

The separator 123 may be provided between the first electrode 121 and the second electrode 122. The separator 123 may be provided to limit electrical short-circuiting between the first and second electrodes 121 and 122 and allow ions to flow. In some embodiments, the separator 123 may include a porous polymer film, a porous nonwoven fabric, and the like. For example, the porous polymer film may include a polyolefin polymer such as an ethylene polymer, a propylene polymer, an ethylene/butene copolymer, an ethylene/hexene copolymer, an ethylene/methacrylate copolymer, and the like. In addition, the porous nonwoven fabric may include high-melting-point glass fiber, polyethylene terephthalate fiber, and the like.

Meanwhile, in some embodiments, the first electrode 121 may include the first electrode tab 121c. In the illustrated embodiment, the first electrode tab 121c is provided at an upper end portion of the first electrode 121. As described above, the first electrode tab 121c may be provided as a plurality of first electrode tabs 121c, and the plurality of first electrode tabs 121c may be disposed in a direction in which the first electrode 121 is wound. Additionally, the first electrode tab 121c may be provided in an upper region of the first metal foil 121a in which the coating of the first active material 121b is omitted. In other words, the first electrode 121 may include a first non-coated portion 121d in which the coating of the first active material 121b is omitted, and the first electrode tab 121c may be provided in the first non-coated portion 121d.

Similarly to the above, in some embodiments, the second electrode 122 may include the second electrode tab 122c. In the illustrated embodiment, the second electrode tab 122c is provided at a lower end portion of the second electrode 122. The second electrode tab 122c may be provided in a second non-coated portion 122d in which the coating of the second active material 122b is omitted and may be provided as a plurality of second electrode tabs 122c.

Meanwhile, the separator 123 may be provided between the first electrode 121 and the second electrode 122 as described above. In some embodiments, an upper end portion of the separator 123 may be disposed between the first electrode tab 121c and an upper end of the second electrode 122. The upper end portion of the separator 123 may function to electrically insulate between the first electrode tab 121c and the second electrode 122. Similarly, a lower end portion of the separator 123 may be disposed between a lower end of the first electrode 121 and the second electrode tab 122c. The lower end portion of the separator 123 may function to electrically insulate between the first electrode 121 and the second electrode tab 122c.

FIG. 4 is a view illustrating a flattening process of electrode tabs at upper and lower end portions of the electrode assembly wound as illustrated in FIG. 3.

Referring to FIG. 4, the electrode assembly 120 wound as illustrated in FIG. 3 may undergo a flattening process in which the first and second electrode tabs 121c and 122c are bent toward the central axis C1, and the bent first and second electrode tabs 121c and 122c are pressed vertically to be compacted. In the flattening process, the first and second electrode tabs 121c and 122c may be pressed (F1) respectively by a predetermined pressing device M1 and M2, and thereby the first and second electrode tabs 121c and 122c may include the first and second bonding surfaces 121e and 122e as illustrated in FIG. 2. Afterwards, a current collector, a cap plate, or the like can be appropriately bonded to the first and second bonding surfaces 121e and 122e. For example, a current collector may be placed on the first bonding surface 121e, and the current collector may be welded to the first bonding surface 121e through laser welding. Next, the secondary battery according to embodiments of the present disclosure will be described.

Meanwhile, the X-direction, Y-direction, and Z-direction referred to below are provided solely for the purpose of facilitating a clear understanding of the present disclosure, and of course may be defined differently depending on where the reference is set.

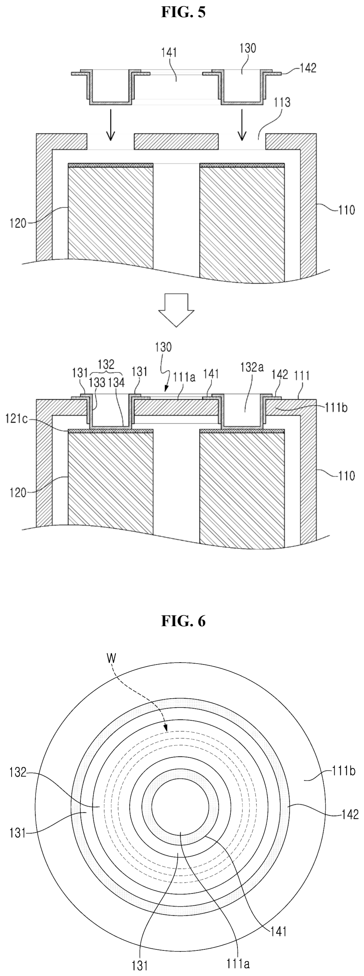

FIG. 5 is a cross-sectional view of an upper portion of the secondary battery illustrated in FIG. 1.

Referring to FIG. 5, in some embodiments, the secondary battery 100 may be provided, which includes an electrode assembly 120 provided with an electrode tab 121c, a can 110 that accommodates the electrode assembly 120 and has a coupling hole 113 provided in an outer part of a surface facing the electrode tab 121c, and a terminal 130 that is inserted into the coupling hole 113 and electrically connected to the electrode tab 121c.

In some embodiments, an upper surface 111 of the can 110 is provided with the coupling hole 113, and the terminal 130 may be inserted into the coupling hole 113. The coupling hole 113 may be provided in a ring shape, an arc shape, etc., as will be described in detail below, and the terminal 130 may be provided in a shape corresponding to the coupling hole 113 and may be inserted into the coupling hole 113. The terminal 130 may be electrically connected to the electrode tab 121c of the electrode assembly 120 when inserted into the coupling hole 113. The terminal 130 may be inserted into the coupling hole 113 from the upper side and coupled to the can 110, and the electrode assembly 120 may be inserted into the interior of the can 110 from the lower side. The order in which the terminal 130 and the electrode assembly 120 are assembled into the can 110 may be the same or one may be assembled before the other.

In some embodiments, the coupling hole 113 into which the terminal 130 is inserted may be provided in the outer part of the surface of the can 110, i.e., the upper surface 111. The terminal 130 may not be located in the center of the upper surface of the can 110. More specifically, the upper surface 111 of the can 110 includes a central part 111a and an outer part 111b, and the coupling hole 113 may be provided between the central part 111a and the outer part 111b. The conventional structure is one in which the terminal is provided in the center of the upper surface of the can. However, since the electrode tab of the electrode assembly is located further outward in the radial direction P2 than the terminal provided in the center of the can, a current collector needs to be provided to electrically connect the terminal and the electrode tab. However, in the secondary battery 100 according to the present disclosure, since the coupling hole 113 is provided at the outer part of the can 110, the terminal 130 inserted into the coupling hole 113 may directly face the electrode tab 121c in an axial direction C1. Accordingly, the terminal 130 may be directly electrically connected to the electrode tab 121c, thus eliminating the need for a separate current collector. As a result, the structure may be simplified, the number of components may be reduced, and manufacturing costs may be reduced.

In some embodiments, the secondary battery 100 according to the present disclosure may further include insulators 141 and 142 interposed between the terminal 130 and the can 110. The insulators 141 and 142 may block the electrical connection between the terminal 130 and the can 110. The shapes of the insulators 141 and 142 are not particularly limited, and the insulators 141 and 142 may have a structure corresponding to the shape of the terminal 130.

In some embodiments, the terminal 130 may include an outer portion 131 supported on an outer surface of the can 110. The outer portion 131 may have a wider width (e.g., radial width) than the coupling hole 113 and may be supported on the outer surface of the can 110 without being inserted into the coupling hole 113. More specifically, the outer portion 131 may be configured to extend inward and outward in the radial direction P2 from an upper end of a connecting portion 133. A depth to which the terminal 130 is inserted into the coupling hole 113 may be limited by the outer portion 131.

In some embodiments, the terminal 130 may include an insertion portion 132 that is inserted into the coupling hole 113 and supported by the electrode tab 121c. As described above, since the coupling hole 113 is provided in the outer part of one surface of the can 110 and the terminal 130 has a corresponding shape, the terminal 130 and the electrode tab 121c may be directly electrically connected without the need for a current collector.

In some embodiments, the insertion portion 132 may include an opening 132a that is open in a direction opposite to a direction in which the insertion portion 132 is inserted into the coupling hole 113. That is, the opening 132a may be formed to open upward. The insertion portion 132 including the opening 132a may have a cross-section that is an approximate "C" shape. The insertion portion 132 includes the opening 132a and has an empty space therein so that the weight of the terminal 130 may be reduced. However, as will be described below, a separate reinforcing member 150 may be inserted into the opening 132a to reinforce the rigidity of the terminal 130. In addition, since the insertion portion 132 includes the opening 132a, a protrusion 135 may be easily provided by pressing a lower portion of the insertion portion 132.

In some embodiments, the insertion portion 132 may include a support portion 134 supported by the electrode tab 121c and the connecting portion 133 connecting the support portion 134 and the outer portion 131. That is, the opening 132a may be provided between the connecting portion 133 and the support portion 134, and the opening 132a may have a form in which the upper side thereof is open and the lower side thereof is closed by the support portion 134. In addition, welding of the support portion 134 and the electrode tab 121c may be performed through the opening 132a.

FIG. 6 is a plan view illustrating the secondary battery shown in FIG. 1.

Referring to FIG. 6, in some embodiments, the electrode tab 121c and the insertion portion 132 may be welded. In some embodiments, the insertion portion 132 may have a welding line W that is welded to the electrode tab 121c. The welding line W may be provided on the support portion 134. Alternatively, in some embodiments, the electrode tab 121c and the insertion portion 132 may be bonded with a conductive adhesive. More specifically, the support portion 134 of the insertion portion 132 may be supported by the electrode tab 121c, and the support portion 134 may be welded to the electrode tab 121c or bonded with a conductive adhesive. The insertion portion 132 including the opening 132a has a thin thickness, and also, since a welding area is exposed through the opening 132a, the ease of welding the support portion 134 and the electrode tab 121c may be improved.

In some embodiments, the coupling hole 113 may be provided in a ring shape. The ring shape may mean a shape provided along a circular path with a predetermined outer diameter and inner diameter. In FIGS. 5 and 6, the terminal 130 and the insulators 141 and 142 are illustrated as having a ring shape as the coupling hole 113 is provided in a ring shape. As the coupling hole 113 has a ring shape, in the upper surface 111 of the can 110, the central part 111a may be separated from the outer part 111b. The central part 111a separated from the outer part 111b is first coupled to the inner side of the terminal 130, and the terminal 130 may be coupled to the can 110 in such a way that the terminal 130 to which the central part 111a is coupled is coupled to the outer part 111b. Since the coupling hole 113 has a ring shape, there is an advantage in that when arranging a plurality of secondary batteries 100 according to the present disclosure and connecting the arranged secondary batteries 100 with a bus bar (not shown), there is no need to consider the arrangement direction of each secondary battery 100. That is, when configuring a battery module or a battery pack by arranging the plurality of secondary batteries 100 according to the present disclosure, there is an advantage in assembly in that there is no need to consider the coupling direction of each the secondary battery 100 and the bus bar, as the shape of the secondary batteries 100 does not have a directionality in a P1 direction.

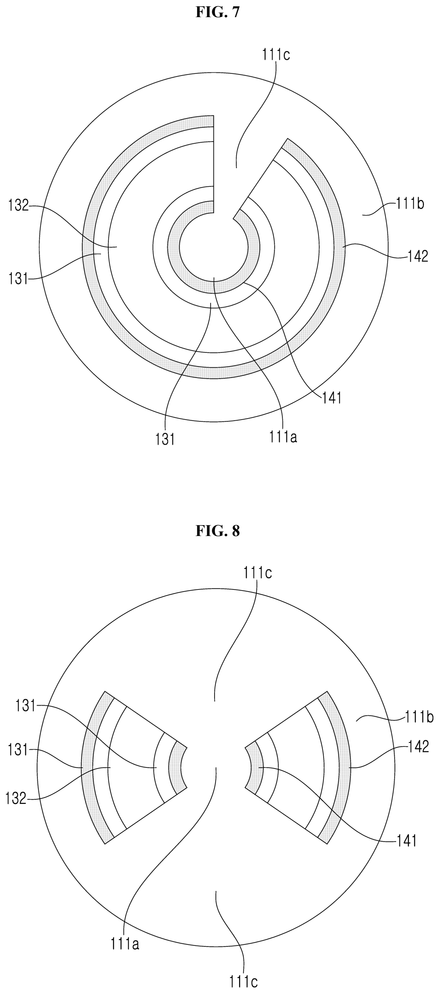

FIG. 7 is a plan view illustrating a secondary battery according to another embodiment of the present disclosure.

Referring to FIG. 7, in some embodiments, a coupling hole 113 may be provided in an arc shape. More specifically, FIG. 7 illustrates an embodiment in which the coupling hole 113 has a single arc shape. As the coupling hole 113 is provided in an arc shape, a terminal 130 and insulators 141 and 142 are also illustrated as having an arc shape. Compared to the embodiment illustrated in FIG. 6, an upper surface 111 of a can 110 includes a central part 111a and a outer part 111b connected by a connecting portion 111c, so that when the terminal 130 is connected, there may be no inconvenience of having to separately connect the central part 111a. However, when configuring a battery module or a battery pack by arranging a plurality of secondary batteries 100 according to the present disclosure, there is a disadvantage in that the shape of the secondary batteries 100 has some directionality in the P1 direction, and thus the direction of coupling between each of the secondary batteries 100 and the bus bar should be considered.

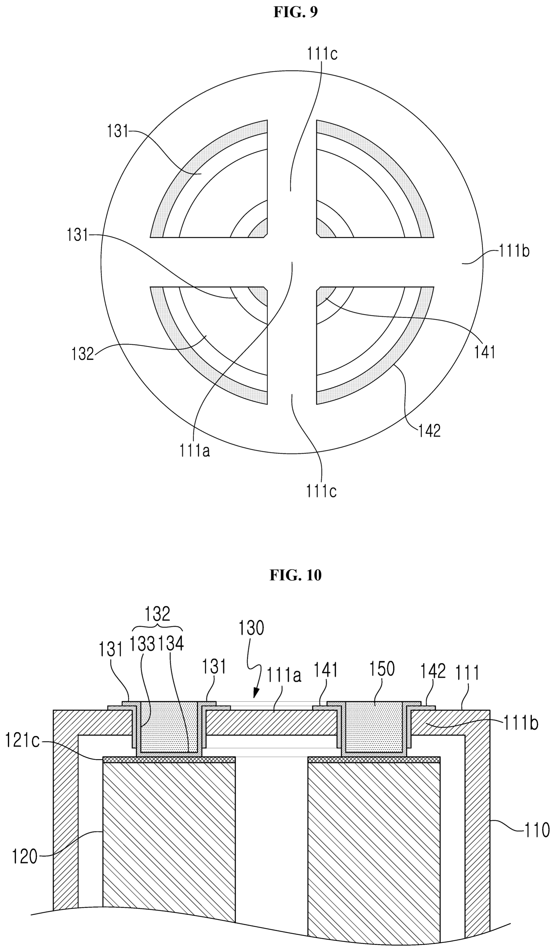

FIG. 8 is a plan view illustrating a secondary battery according to still another embodiment of the present disclosure, and FIG. 9 is a plan view illustrating a secondary battery according to yet another embodiment of the present disclosure.

Referring to FIGS. 8 and 9, in some embodiments, a coupling hole 113 may be provided in an arc shape, but may have the same shape and may be arranged at equal intervals. A terminal 130 and insulators 141 and 142 may have shapes corresponding to the shape and arrangement of the coupling hole 113. Likewise, an upper surface 111 of a can 110 has a central part 111a and a outer part 111b connected by a connecting portion 111c, so that when the terminal 130 is connected, there may be no inconvenience of having to separately connect the central part 111a. However, since the coupling hole 113 has a symmetrical shape along the P1 direction, when configuring a battery module or a battery pack by arranging a plurality of secondary batteries 100 according to the present disclosure, the coupling of each of the secondary batteries 100 and the bus bar may be easier.

FIG. 10 is a cross-sectional view illustrating an upper portion of a secondary battery according to yet another embodiment of the present disclosure.

Referring to FIG. 10, in some embodiments, the secondary battery 100 according to the present disclosure may further include a reinforcing member 150 inserted into an opening 132a of an insertion portion 132. The reinforcing member 150 may be inserted into the opening 132a after the insertion portion 132 and an electrode tab 121c are joined. The reinforcing member 150 may be made of the same material as the terminal 130. Alternatively, the reinforcing member 150 may be made of an insulating material. The reinforcing member 150 may be inserted into the opening 132a to reinforce the rigidity of the terminal 130. Although the drawing illustrates an embodiment in which the reinforcing member 150 is inserted into the entire insertion portion 132, the reinforcing member 150 may also be inserted into only a portion of the opening 132a.

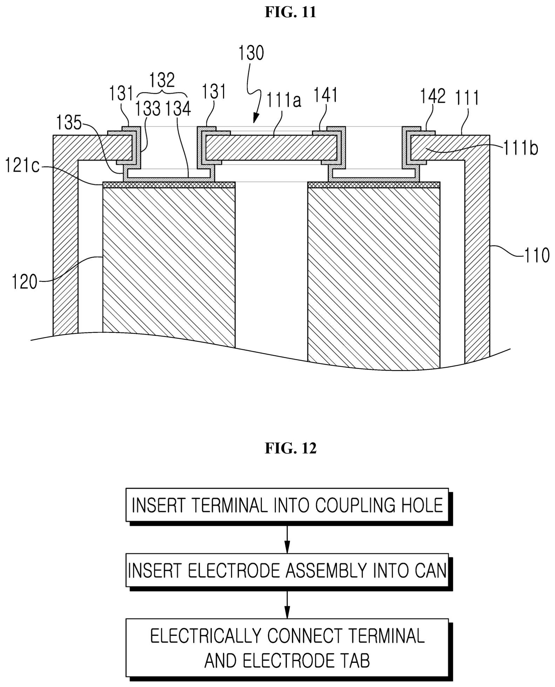

FIG. 11 is a cross-sectional view illustrating an upper portion of a secondary battery according to yet another embodiment of the present disclosure.

Referring to FIG. 11, in some embodiments, the insertion portion 132 may include a protrusion 135 protruding laterally from the lower portion of the insertion portion 132. The protrusion 135 may be formed by pressing the lower portion of the insertion portion 132 inserted into the coupling hole 113. The outer portion 131 and the protrusion 135 may be supported on the outer surface and inner surface of the can 110, respectively and the terminal 130 may be fixed to the can 110. After the lower portion of the insertion portion 132 is pressed and the protrusion 135 is provided, the coupling of the support portion 134 and the electrode tab 121c may be performed. In some embodiments, the protrusion 135 may be provided by pressing the lower portion of the insertion portion 132 by a press tool inserted into the interior of the can 110 from the lower side.

FIG. 12 is a flow chart of a method of manufacturing a secondary battery according to one embodiment of the present disclosure.

Referring to FIG. 12, in some embodiments, the method of manufacturing a secondary battery 100 may be provided, which includes inserting a terminal 130 into a coupling hole 113, inserting an electrode assembly 120 into a can 110, and electrically connecting the terminal 130 and an electrode tab 121c.

In some embodiments, in the operation of inserting the terminal 130 into the coupling hole 113, an insertion portion 132 may have a shape corresponding to the coupling hole 113 and may be inserted into the coupling hole 113. Additionally, insulators 141 and 142 may be inserted into the coupling hole 113 along with the terminal 130.

In some embodiments, the operation of inserting the terminal 130 into the coupling hole 113 may be performed before the operation of inserting the electrode assembly 120 into the can 110. Alternatively, in some embodiments, the operation of inserting the electrode assembly 120 into the can 110 may be performed before the operation of inserting the terminal 130 into the coupling hole 113. Alternatively, in some embodiments, the operation of inserting the terminal 130 into the coupling hole 113 and the operation of inserting the electrode assembly 120 into the can 110 may be simultaneously performed.

In some embodiments, in the operation of electrically connecting the terminal 130 and the electrode tab 121c, the insertion portion 132 and the electrode tab 121c may be welded or bonded with a conductive adhesive.

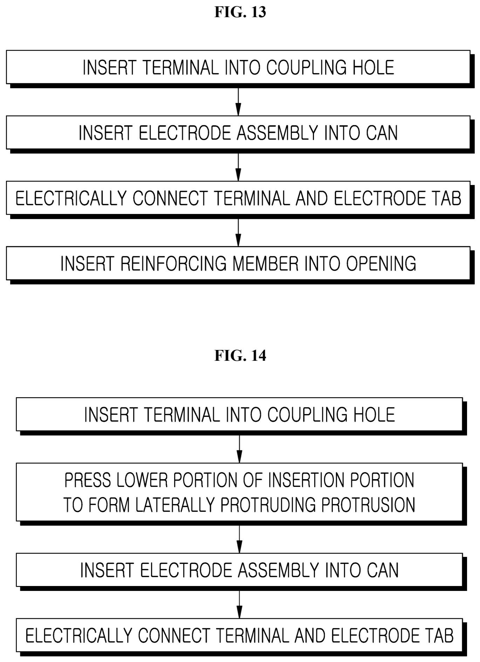

FIG. 13 is a flow chart of a method of manufacturing a secondary battery according to another embodiment of the present disclosure.

Referring to FIG. 13, in some embodiments, a terminal 130 is inserted into a coupling hole 113 and includes an insertion portion 132 supported by an electrode tab 121c, the insertion portion 132 includes an opening 132a that is open in a direction opposite to a direction in which the insertion portion 132 is inserted into the coupling hole 113, and the method of manufacturing the secondary battery may further include inserting a reinforcing member 150 into the opening 132a.

In some embodiments, the operation of inserting the reinforcing member 150 into the opening 132a may be performed after the terminal 130 and the electrode tab 121c are electrically connected.

FIG. 14 is a flow chart of a method of manufacturing a secondary battery according to still another embodiment of the present disclosure.

Referring to FIG. 14, in some embodiments, a terminal 130 is inserted into a coupling hole 113 and includes an insertion portion 132 supported by an electrode tab 121c, the insertion portion 132 includes an opening 132a that is open in a direction opposite to a direction in which the insertion portion 132 is inserted into the coupling hole 113, and the method of manufacturing the secondary battery may further include pressing a lower portion of the insertion portion 132 to form a protrusion 135 that protrudes laterally.

In some embodiments, the operation of forming the protrusion 135 may be performed after inserting the terminal 130 into the coupling hole 113. However, referring to the above, after inserting the terminal 130 into the coupling hole 113, the protrusion 135 may be formed by pressing, and then the electrode assembly 120 may be inserted into the can 110. Alternatively, after inserting the electrode assembly 120 into the can 110, the terminal 130 may be inserted into the coupling hole 113 and pressed to form the protrusion 135.

According to the secondary battery having such a structure and the method of manufacturing the same, a secondary battery having a simplified structure may be provided. In addition, a secondary battery with a reduced number of components may be provided. In addition, a secondary battery with reduced costs may be provided.

Embodiments of the present disclosure can provide a secondary battery and a method of manufacturing the same.

Also, some embodiments of the present disclosure can provide a secondary battery having a simplified structure and a method of manufacturing the same.

Also, some embodiments of the present disclosure can provide a secondary battery with a reduced number of components and a method of manufacturing the same.

Also, some embodiments of the present disclosure can provide a secondary battery with reduced costs and a method of manufacturing the same.

Some of the aspects of the present disclosure are as follows:
Aspect 1: A secondary battery (100) comprising: an electrode assembly (120) provided with an electrode tab (121c); a can (110) that accommodates the electrode assembly (120) and has a coupling hole (113) provided in an outer part of one surface facing the electrode tab (121c); and a terminal (130) inserted into the coupling hole (113) and electrically connected to the electrode tab (121c).
Aspect 2: The secondary battery (100) of claim 1, further comprising an insulator (141, 142) interposed between the terminal (130) and the can (110).
Aspect 3: The secondary battery (100) according to any one of the preceding claims, wherein the terminal (130) comprises an outer portion (131) supported on an outer surface of the can (110).
Aspect 4: The secondary battery (100) according to any one of the preceding claims, wherein the terminal (130) comprises an insertion portion (132) inserted into the coupling hole (113) and supported by the electrode tab (121c).
Aspect 5: The secondary battery (100) according to any one of the preceding claims, wherein the insertion portion (132) comprises an opening (132a) that is open in a direction opposite to a direction in which the insertion portion (132) is inserted into the coupling hole (113).
Aspect 6: The secondary battery (100) according to any one of the preceding claims, wherein the electrode tab (121c) and the insertion portion (132) are welded.
Aspect 7: The secondary battery (100) according to any one of the preceding claims6, wherein the insertion portion (132) is provided with a welding line (W) that is welded to the electrode tab (121c).
Aspect 8: The secondary battery (100) according to any one of the preceding claims, wherein the electrode tab (121c) and the insertion portion (132) are bonded with a conductive adhesive.
Aspect 9: The secondary battery (100) according to any one of the preceding claims, wherein the coupling hole (113) is provided in a ring shape.
Aspect 10: The secondary battery (100) according to any one of the preceding claims, wherein the coupling hole (113) is provided in an arc shape.
Aspect 11: The secondary battery (100) according to any one of the preceding claims, further comprising a reinforcing member (150) inserted into the opening (132a)of the insertion portion (132).
Aspect 12: The secondary battery (100) according to any one of the preceding claims, wherein the insertion portion (132) comprises a protrusion (135) protruding laterally from a lower portion of the insertion portion (132).
Aspect 13: A method of manufacturing the secondary battery (100) according to any one of the preceding claims, comprising: inserting the terminal (130) into the coupling hole (113); inserting the electrode assembly (120) into the can (110); and electrically connecting the terminal (130) and the electrode tab (121c).
Aspect 14: The method of claim 13, wherein the terminal (130) is inserted into the coupling hole (113) and comprises an insertion portion (132) supported by the electrode tab (121c), the insertion portion (132) comprises an opening (132a) that is open in a direction opposite to a direction in which the insertion portion (132) is inserted into the coupling hole (113), and the method further comprises inserting a reinforcing member into the opening.
Aspect 15: The method of claim 13, wherein the terminal (130) is inserted into the coupling hole (113) and comprises an insertion portion (132) supported by the electrode tab (121c), the insertion portion (132) comprises an opening (132a) that is open in a direction opposite to a direction in which the insertion portion (132) is inserted into the coupling hole (113), and the method further comprises pressing a lower portion of the insertion portion (132) to form a protrusion (135) that protrudes laterally.

The above description is merely an example of applying the principles of the present disclosure, and other configurations may be further included without departing from the scope of the present disclosure.

## Claims

1. A secondary battery (100) comprising:
an electrode assembly (120) provided with an electrode tab (121c);
a can (110) that accommodates the electrode assembly (120) and has a coupling hole (113) provided in an outer part of one surface facing the electrode tab (121c); and
a terminal (130) inserted into the coupling hole (113) and electrically connected to the electrode tab (121c).

2. The secondary battery (100) of claim 1, further comprising an insulator (141, 142) interposed between the terminal (130) and the can (110).

3. The secondary battery (100) according to any one of the preceding claims, wherein the terminal (130) comprises an outer portion (131) supported on an outer surface of the can (110).

4. The secondary battery (100) according to any one of the preceding claims, wherein the terminal (130) comprises an insertion portion (132) inserted into the coupling hole (113) and supported by the electrode tab (121c).

5. The secondary battery (100) according to any one of the preceding claims, wherein the insertion portion (132) comprises an opening (132a) that is open in a direction opposite to a direction in which the insertion portion (132) is inserted into the coupling hole (113).

6. The secondary battery (100) according to any one of the preceding claims, wherein the electrode tab (121c) and the insertion portion (132) are welded.

7. The secondary battery (100) according to any one of the preceding claims6, wherein the insertion portion (132) is provided with a welding line (W) that is welded to the electrode tab (121c).

8. The secondary battery (100) according to any one of the preceding claims, wherein the electrode tab (121c) and the insertion portion (132) are bonded with a conductive adhesive.

9. The secondary battery (100) according to any one of the preceding claims, wherein the coupling hole (113) is provided in a ring shape.

10. The secondary battery (100) according to any one of the preceding claims, wherein the coupling hole (113) is provided in an arc shape.

11. The secondary battery (100) according to any one of the preceding claims, further comprising a reinforcing member (150) inserted into the opening (132a)of the insertion portion (132).

12. The secondary battery (100) according to any one of the preceding claims, wherein the insertion portion (132) comprises a protrusion (135) protruding laterally from a lower portion of the insertion portion (132).

13. A method of manufacturing the secondary battery (100) according to any one of the preceding claims, comprising:
inserting the terminal (130) into the coupling hole (113);
inserting the electrode assembly (120) into the can (110); and
electrically connecting the terminal (130) and the electrode tab (121c).

14. The method of claim 13, wherein the terminal (130) is inserted into the coupling hole (113) and comprises an insertion portion (132) supported by the electrode tab (121c), the insertion portion (132) comprises an opening (132a) that is open in a direction opposite to a direction in which the insertion portion (132) is inserted into the coupling hole (113), and
the method further comprises inserting a reinforcing member into the opening.

15. The method of claim 13, wherein the terminal (130) is inserted into the coupling hole (113) and comprises an insertion portion (132) supported by the electrode tab (121c), the insertion portion (132) comprises an opening (132a) that is open in a direction opposite to a direction in which the insertion portion (132) is inserted into the coupling hole (113), and
the method further comprises pressing a lower portion of the insertion portion (132) to form a protrusion (135) that protrudes laterally.
